# EUROPEAN PATENT APPLICATION

(11) **EP 4 734 024 A1**
(43) Date of publication of application: **29.04.2026**
(21) Application number: 24831371.0
(22) Date of filing: 11.04.2024
(51) Int. Cl.: G06Q 10/20

(54) **MANAGEMENT SYSTEM AND MANAGEMENT METHOD**

(30) Priority: 26.06.2023 JP 2023104400
(71) Applicant: Panasonic Intellectual Property Management Co., Ltd., Kadoma-shi, Osaka 571-0057 (JP)
(72) Inventor: MURATA, Shinichi, kadoma-shi, Osaka 571-0057 (JP); HIGUCHI, Seiya, kadoma-shi, Osaka 571-0057 (JP)
(74) Representative: Novagraaf International SA
(86) International application number: PCT/JP2024/014653
(87) International publication number: WO 2025/004496

(57) **Abstract**

A management system (100) includes an obtainer (11); a determiner (12); an outputter (13). The obtainer (11) obtains inquiry information on an inquiry about a trouble in a device (3). The determiner (12) determines, after the inquiry, whether the trouble is resolved, based on presence or absence of device information that can be transmitted via a network (N1) from the device (3) associated with the inquiry information obtained by the obtainer (11). The outputter (13) outputs the result of determination by the determiner (12).

## Description

### [Technical Field]

The present disclosure relates to a management system, and so on, for managing an inquiry about a trouble in a device.

### [Background Art]

For example, Patent Literature (PTL) 1 discloses a call center device. The call center device stores the identifier of an information home appliance terminal and the address of the information home appliance terminal. In response to a call from a call terminal of a public network, the call center device connects the call between the information home appliance terminal and an operator terminal. At this time, the address of the information home appliance terminal associated with the identifier of the information home appliance terminal transmitted from the call terminal of the public network is regarded as a call destination address.

For example, PTL 2 discloses a device connection support system. The device connection support system refers to connectability information indicating whether devices are available while being electrically connected to each other in advance. If two client devices are connectable to each other, the device connection support system obtains information on problems that may occur in association with the electrical connection between the devices, and transmits the information to a communications terminal device.

### [Citation List]

### [Patent Literature]

[PTL 1] Japanese Unexamined Patent Application Publication No. 2009-218810
[PTL 2] Japanese Unexamined Patent Application Publication No. 2013-161385

### [Summary of Invention]

### [Technical Problem]

The present disclosure provides a management system, and so on, that can easily grasp whether a trouble is resolved in a device about which an inquiry has been made.

### [Solution to Problem]

A management system according to an aspect of the present disclosure includes an obtainer, a determiner, and an outputter. The obtainer obtains inquiry information on an inquiry about a trouble in a device. The determiner determines, after the inquiry, whether the trouble is resolved, based on presence or absence of device information that can be transmitted via a network from the device associated with the inquiry information obtained by the obtainer. The outputter outputs a result of determination by the determiner.

A management method according to an aspect of the present disclosure includes obtaining inquiry information on an inquiry about a trouble in a device. The management method further includes: determining, after the inquiry, whether the trouble is resolved, based on presence or absence of device information that can be transmitted via a network from the device associated with the inquiry information obtained. The management method further includes: outputting a result of determination.

### [Advantageous Effects of Invention]

The management system, and so on, according to the present disclosure are advantages in easily grasping whether a trouble is resolved in a device about which an inquiry has been made.

### [Brief Description of Drawings]

[FIG. 1]

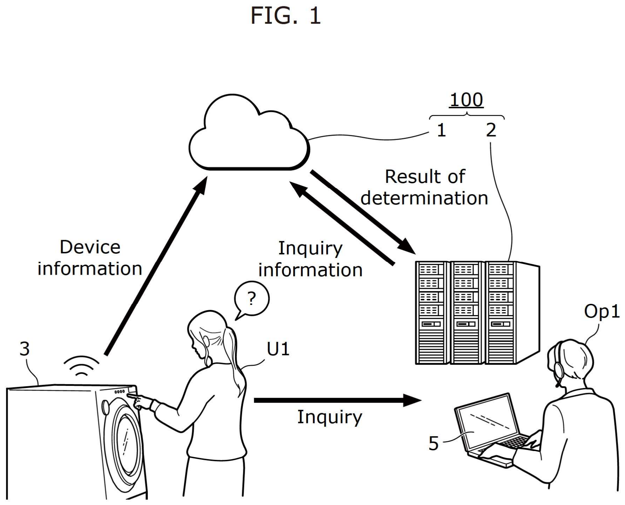

   FIG. 1 is a schematic view of an overall configuration including a management system according to an embodiment.
[FIG. 2]

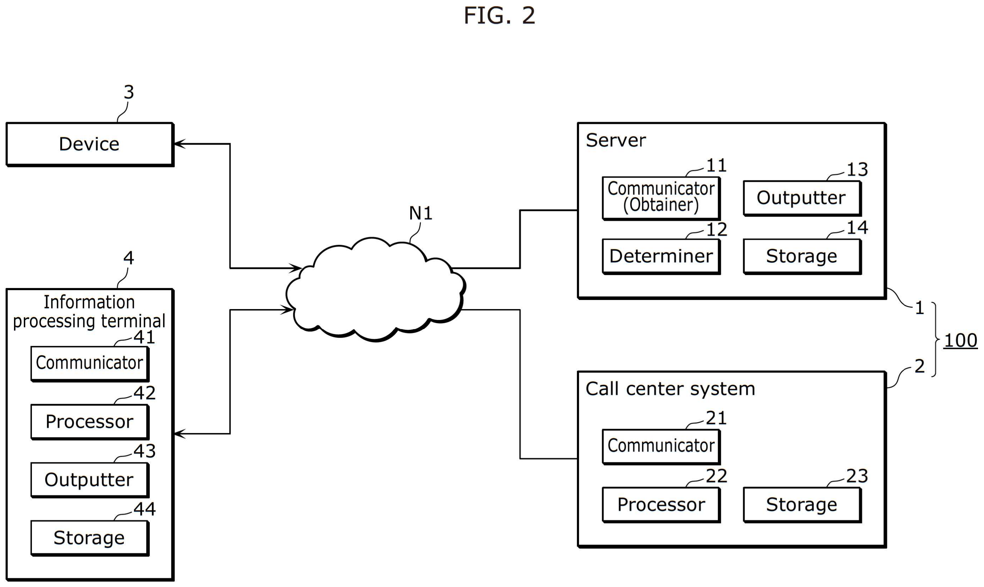

   FIG. 2 is a block diagram showing the overall configuration including the management system according to the embodiment.
[FIG. 3]

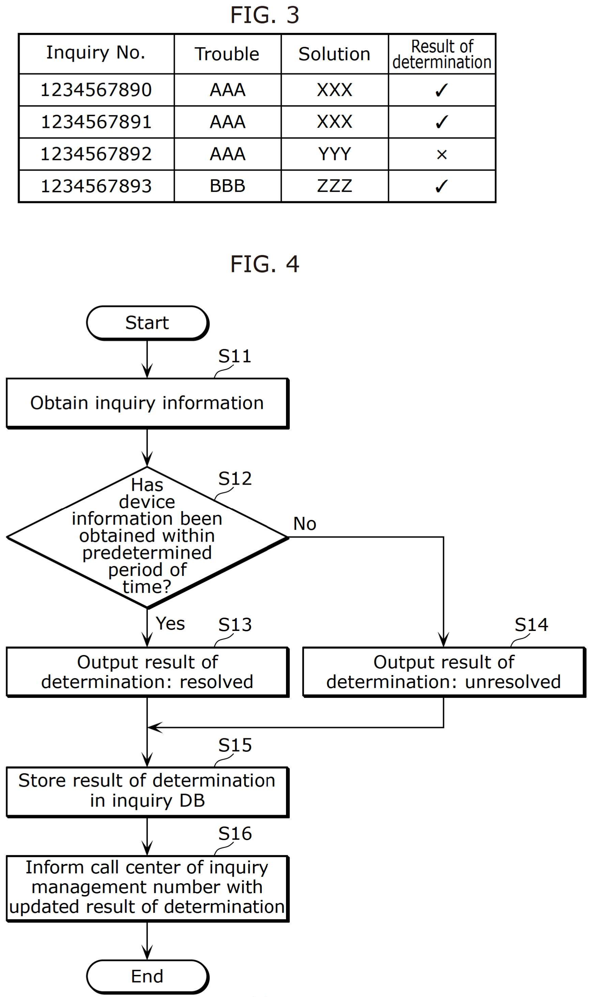

   FIG. 3 shows example data to be stored in an inquiry database.
[FIG. 4]
   FIG. 4 is a flowchart showing an example operation of the management system according to the embodiment.
[FIG. 5]

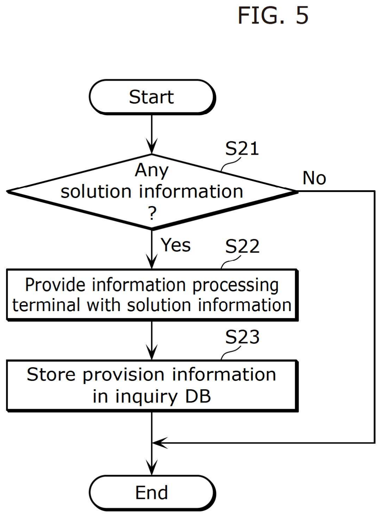

   FIG. 5 is a flowchart showing an example operation of a management system according to a variation of the embodiment.

### [Description of Embodiment]

### (Underlying Knowledge Forming Basis of the Present Disclosure)

First, the points of focus of the present inventor will be described below.

For example, once finding any trouble in a device, such as a home appliance, the user of the device typically makes an inquiry by calling a call center or any other means to resolve the trouble. There are cases where the trouble in the device is solvable and where the trouble is unsolvable even after the user has executed the solution suggested by an operator at the call center.

Here, the user typically ends the call with the operator once when executing the solution suggested by the operator. For example, if the trouble in the device relates to network connection of the device using a smartphone owned by the user, solutions to this trouble including attempt to reboot the smartphone are often inexecutable while keeping the call with the operator.

Even if the trouble in the device is solvable by the solution suggested by the operator, the user rarely informs the operator of the fact. On the other hand, if the trouble in the device is unsolvable by the solution suggested by the operator, the user does or does not make an inquiry to the operator again. In this manner, the user does not necessarily inform as to whether the trouble in the device is resolved after the inquiry. It is thus difficult for the call center to grasp whether the trouble is resolved in the device about which the inquiry has been made.

From the foregoing, the present inventor has thought of the present disclosure.

Now, an embodiment will be described in detail with reference to the drawings as appropriate. Unnecessarily detailed description may be however omitted. For example, detailed description of already well known matters or duplicated description of substantially the same configurations may omitted. This is no to make the following description unnecessarily redundant and for easier understanding of the following description by those skilled in the art.

Note that the present inventor provides the appended drawings and the following description for sufficient understanding of the present disclosure by those skilled in the art and does not intend to limit the subject matters recited in the claims by the appended drawings and the following description.

### [Embodiment]

### [1-1. Overall Configuration]

First, an overall configuration including management system 100 according to the embodiment will be described with reference to FIGS. 1 and 2. FIG. 1 is a schematic view showing the overall configuration including management system 100 according to the embodiment. FIG. 2 is a block diagram showing the overall configuration including management system 100 according to the embodiment. Management system 100 is for managing an inquiry about a trouble in device 3. In the embodiment, management system 100 includes server 1 and call center system 2.

For example, device 3 is installed in the facility where user U1 lives. In the embodiment, device 3 is a home appliance. More specifically, device 3 is connectable to network N1, such as the Internet, and what is called an Internet of Things (IoT) device. Specifically, examples of device 3 include an air conditioner, a washing machine, a robot vacuum cleaner, a refrigerator, a rice cooker, and a microwave.

While being connected to network N1, device 3 transmits device information to management system 100 (i.e., server 1 here) via network N1 periodically or at the occurrence of an event as a trigger. Examples of the event occurring in device 3 may include connection of device 3 to network N1, the start and end of an operation of device 3, the occurrence of an error in device 3, and maintenance of device 3. The device information includes information indicating the details of the event that has occurred. For example, if the event is the occurrence of an error in device 3, the device information may include an error code associated with this error.

For example, information processing terminal 4 is owned by user U1, and a portable terminal, such as a smartphone, a tablet terminal, or a laptop personal computer. Information processing terminal 4 includes a processor and a memory, and achieves the configurations of information processing terminal 4 by the processor executing the computer programs stored in the memory. In the embodiment, the memory is storage 44.

As shown in FIG. 1, information processing terminal 4 has a function for making an inquiry about a trouble in device 3 to operator Op1 at the call center. Specifically, information processing terminal 4 has installed therein an application for make settings related to device 3, such as connection of device 3 to network N1. Using the function, such as Web Real-Time Communication (WebRTC), included in this application, user U1 can make an inquiry to operator Op1.

Note that user U1 may make an inquiry to operator Op1 using not this application but a call function of information processing terminal 4, or using a call function of a terminal other than information processing terminal 4.

As shown in FIG. 2, information processing terminal 4 includes communicator 41, processor 42, outputter 43, and storage 44.

Communicator 41 includes a communication interface for communications via network N1. In the embodiment, communicator 41 includes a wireless communication interface, and is communicable with server 1, call center system 2, and operator terminal 5 used by operator Op1 without via network N1. Communicator 41 also includes a communication interface for communications with device 3 without via network N1. Specifically, for example, communicator 41 includes a near-field wireless communication interface, such as Bluetooth (registered trademark) and is communicable with device 3 without via network N1.

Processor 42 has a function of make settings related to device 3, such as connection of device 3 to network N1, by executing the application described above. Specifically, for example, processor 42 make settings related to device 3 in accordance with an input by user U1 at an input device, such as a touch panel display, build in information processing terminal 4. The setting information on set device 3 is stored in storage 44.

For example, if information processing terminal 4 has a display function, outputter 43 outputs various information by displaying character strings or an image on a display built in information processing terminal 4. For example, if information processing terminal 4 has an audio output function, outputter 43 outputs various information by outputting sound from a speaker built in information processing terminal 4. In the embodiment, information processing terminal 4 has both the audio output function and the display function.

Storage 44 is a storage device that stores information (e.g., computer programs) necessary for the processor of information processing terminal 4 to perform various processes. Storage 44 is a semiconductor memory, for example, but not limited thereto. Any known electronic information storage means may be used. For example, storage 44 stores setting information or other information on device 3.

### [1-2. Management System]

Now, the details of management system 100 will be described. As already mentioned and as shown in FIGS. 1 and 2, management system 100 includes server 1 and call center system 2 in the embodiment.

For example, server 1 is operated by a business operator that sells device 3 or a business operator that manages device 3. Server 1 includes a processor and a memory, and achieves part of the configurations of management system 100 by the processor executing the computer programs stored in the memory. In the embodiment, the memory is storage 14.

As shown in FIG. 2, server 1 is communicable with call center system 2, device 3, and information processing terminal 4 via network N1. In the example shown in FIG. 2, one call center system 2, one device 3, and one information processing terminal 4 are provided, a plurality of these elements may be provided.

As shown in FIG. 2, server 1 includes communicator 11, determiner 12, outputter 13, and storage 14.

Communicator 11 includes a communication interface for communications via network N1. In the embodiment, communicator 11 includes a wired communication interface or a wireless communication interface, and is communicable with call center system 2, device 3, and information processing terminal 4 via network N1. Communicator 11 also serves as obtainer 11 that obtains inquiry information. In the embodiment, obtainer 11 obtains the inquiry information by receiving the inquiry information transmitted from call center system 2 via network N1. The inquiry information obtained by obtainer 11 is stored in storage 14.

Here, the inquiry information relates to inquiries about troubles in devices 3, and includes inquiry management numbers, user identifiers (IDs), and the device information for identifying devices 3. The inquiry management numbers are assigned for distinguishing and managing the inquiries from one or more users U1 in call center system 2. The user IDs are the identifiers assigned to users U1. In the embodiment, users ID are assigned to applications executed by processors 42 of information processing terminals 4 and are thus identifiers assigned to information processing terminals 4. The device information includes identifiers assigned to devices 3 and the types of devices 3 which are information for distinguishing a plurality of types of devices 3.

After the inquiry, determiner 12 determines whether the trouble is resolved, based on presence or absence of device information that can be transmitted via network N1 from device 3 associated with the inquiry information obtained by obtainer 11. Whether the source of the device information is device 3 associated with the inquiry information can be determined based on whether the device information matches the device information included in the inquiry information stored in storage 14.

In the embodiment, the trouble in device 3 relates to connection of device 3 to network N1. Examples of the trouble in device 3 include a failure in accessing network N1 by user U1 who has tried to execute the application of information processing terminal 4 at the time of initial settings of device 3. Examples of the trouble in device 3 includes interruption of the connection of device 3 with network N1 for some reasons.

In the embodiment, after the inquiry, determiner 12 determines that the trouble is resolved, when obtaining the device information from device 3 associated with the inquiry information obtained by obtainer 11. That is, once being connected to network N1, device 3 transmits the device information to server 1 via network N1 periodically or at the connection to network N1 as a trigger. Thus, when obtaining the device information from device 3, determiner 12 determines that this device 3 is connected to network N1, that is, the trouble in device 3 is resolved.

On the other hand, after the inquiry, determiner 12 determines that the trouble is unresolved, when the device information is not obtained from device 3 associated with the inquiry information obtained by obtainer 11 for a predetermined time (e.g., couples of days). That is, as described above, once being connected to network N1, device 3 transmits the device information to server 1 via network N1. Accordingly, if the state continues in which the device information is unavailable from device 3, determiner 12 determines that this device 3 is not connected to network N1, that is, the trouble in device 3 is unresolved.

Outputter 13 outputs the result of determination by determiner 12. In the embodiment, outputter 13 outputs the result of determination by transmitting the result of determination by determiner 12, that is, the information indicating whether the trouble in device 3 is resolved to call center system 2 via communicator 11 and network N1. Here, outputter 13 transmits, in addition to the result of determination, the inquiry management number associated with this result of determination to call center system 2.

Storage 14 is a storage device that stores information (e.g., computer programs) necessary for the processor of server 1 to perform various processes. Storage 14 is a semiconductor memory, for example, but not limited thereto. Any known electronic information storage means may be used. Storage 14 stores the inquiry information, for example.

For example, call center system 2 is a server operated by a business operator that provides customer support (CS) service of receiving an inquiry about a trouble in device 3. Call center system 2 includes a processor and a memory, and achieves part of the configurations of management system 100 by the processor executing the computer programs stored in the memory. In the embodiment, the memory is storage 23.

As shown in FIG. 2, call center system 2 is communicable with server 1 and information processing terminal 4 via network N1. As shown in FIG. 2, call center system 2 includes communicator 21, processor 22, and storage 23.

Communicator 21 includes a communication interface for communications via network N1. In the embodiment, communicator 21 includes a wired communication interface or a wireless communication interface, and is communicable with server 1 and information processing terminal 4 via network N1.

Processor 22 executes various processes for managing an inquiry from user U1. Specifically, processor 22 causes the inquiry database of storage 23, which will be described later, to store input information transmitted from operator terminal 5 of operator Op1 and input at operator terminal 5. The input information includes the inquiry management number, the user ID, the device information, the outline of the trouble in device 3, and the outline of a solution to this trouble.

For example, if the trouble in device 3 relates to connection of device 3 to network N1, solutions to this trouble include causing user U1 to reboot information processing terminal 4, causing user U1 to take a correct setting procedure, or causing user U1 to check the settings of a relay device, such as a router, if there is any relay device.

Out of the received input information, processor 22 transmits the inquiry information including the inquiry management number, the user ID, and the device information to server 1 via communicator 21 and network N1. Once communicator 21 receives the result of determination from server 1, processor 22 updates the inquiry database by storing the result of determination in the inquiry database of storage 23. Processor 22 informs the call center of the inquiry management number with the updated result of determination, by transmitting the inquiry management number to operator terminal 5 used by operator Op1 at the call center via communicator 21.

Storage 23 is a storage device that stores information (e.g., computer programs) necessary for the processor of call center system 2 to perform various processes. Storage 23 is a semiconductor memory, for example, but not limited thereto. Any known electronic information storage means may be used. Storage 23 stores the inquiry database shown in FIG. 3, for example.

FIG. 3 shows example data to be stored in the inquiry database. As shown in FIG. 3, the inquiry database stores the inquiry numbers, details of the troubles in device 3, the solutions to the troubles, and results of determination by determiner 12 in association with each other. Although not shown in FIG. 3, the inquiry database further includes the IDs of users U1 who have made the inquiries in association with the data described above. In the column of "Result of determination" shown in FIG. 3, "✔" represents a case where the trouble in device 3 is determined to be resolved, while "×" represents a case where the trouble in device 3 is determined to be unresolved.

The business operator providing the CS service can grasp how much the trouble in device 3 is resolved about which the inquiry has been made, for example, by referring to the data stored in the inquiry database. The business operator providing the CS service allows the data stored in the inquiry database to contribute to an improvement in the CS service, for example, by referring to the data.

### [2. Operation]

Now, an operation (i.e., a management method) of management system 100 according to the embodiment will be described with reference to FIG. 4. FIG. 4 is a flowchart showing an example operation of management system 100 according to the embodiment. Now, the example will be described where user U1 who has tried to connect device 3 to network N1 but failed makes an inquiry to the call center.

First, user U1 makes the inquiry to the call center to have a call with the operator about the trouble in device 3. At this time, for example, if the inquiry is made by means of the WebRTC function of information processing terminal 4, operator terminal 5 can automatically obtain the user ID and the device information assigned to WebRTC. If the inquiry is not made by means of the WebRTC function, operator Op1 obtains the user ID and the device information by asking user U1 and inputting the user ID and the device to operator terminal 5. During the call with user U1, operator Op1 explains a solution to the trouble in device 3 to user U1.

After that, after ending the call with user U1, the operator inputs the input information including the inquiry management number, the user ID, the device information, the outline of the trouble in device 3, and the outline of the solution to operator terminal 5. Operator terminal 5 then transmits the input information to call center system 2. Once communicator 21 receives the input information, processor 22 of call center system 2 causes the inquiry database of storage 23 (i.e., "Inquiry DB 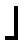 " in FIG. 4) to store the received input information. Out of the received input information, processor 22, transmits the inquiry information including the inquiry management number, the user ID, and the device information to server 1 via communicator 21 and network N1. Accordingly, obtainer 11 of management system 100 (i.e., obtainer 11 of server 1 here) obtains the inquiry information (S11).

Next, determiner 12 of management system 100 (i.e., determiner 12 of server 1 here) determines whether the device information is obtained from device 3 associated with the inquiry information within a predetermined period of time after obtaining the inquiry information (S12).

If the device information is obtained from device 3 associated with the inquiry information within the predetermined period of time after obtaining the inquiry information (Yes in S12), determiner 12 determines that this trouble in device 3 is resolved. Outputter 13 of management system 100 (i.e., outputter 13 of server 1 here) then outputs a result of determination ("Result of determination: resolved" in FIG. 4) indicating that this trouble in device 3 is resolved (S13).

On the other hand, the device information is not obtained from device 3 associated with the inquiry information within the predetermined period of time after obtaining the inquiry information (No in S12), determiner 12 determines that this trouble in device 3 is unresolved. Outputter 13 of management system 100 (i.e., outputter 13 of server 1 here) then outputs a result of determination ("Result of determination: unresolved" in FIG. 4) indicating that this trouble in device 3 is unresolved (S14). Here, outputter 13 outputs the result of determination by transmitting the result of determination and the inquiry management number to call center system 2 via network N1.

Once communicator 21 receives the result of determination and the inquiry management number, processor 22 of call center system 2 updates the inquiry database of storage 23, by causing the inquiry database to store the received result of determination (S15). At this time, processor 22 associates the data associated with the received inquiry management number in the inquiry database with the received result of determination. Processor 22 of call center system 2 then informs the call center of the inquiry management number with the updated result of determination (S16). Here, processor 22 informs the call center of the inquiry management number with the updated result of determination, by transmitting the inquiry management number to operator terminal 5 used by operator Op1 at the call center via communicator 21.

### [3. Advantages]

Now, advantages of management system 100 (and the management method) according to the embodiment will be described.

As already mentioned, user U1 does not necessarily inform as to whether a trouble in device 3 is resolved after making an inquiry to the call center about the trouble in device 3. It is thus difficult for the call center to grasp whether the trouble is resolved in device 3 about which the inquiry has been made.

By contrast, after the inquiry, management system 100 (and the management method) according to the embodiment can output the result of determination as to whether the trouble in device 3 is resolved, based on presence or absence of device information that can be transmitted from device 3 about which the inquiry has been made. Management system 100 (and the management method) according to the embodiment is thus advantageous in easily grasping whether the trouble is resolved in device 3 about which the inquiry has been made, by checking the result of determination.

For example, assume that the inquiry database of storage 23 of call center system 2 stores the result of determination. As already mentioned, the business operator providing the CS service can grasp how much the trouble in device 3 is resolved about which the inquiry has been made, for example, by referring to the data stored in the inquiry database. The business operator providing the CS service allows the data stored in the inquiry database to contribute to an improvement in the CS service, for example, by referring to the data.

### [Variation]

The embodiment has been described above as an example of the techniques disclosed in the present application. The techniques according to the present disclosure are not limited thereto and are applicable to embodiments after various modifications, substitutions, additions, omissions, etc. The elements described above in the embodiment can be combined into another embodiment.

Now, a variation of the embodiment will be described as an example.

For example, in the embodiment described above, assume that determiner 12 determines that the trouble is unresolved. In this case, the outputter of management system 100 (i.e., processor 22 of call center system 2 here) may output solution information indicating a solution different from that presented at the time of the inquiry to information processing terminal 4 owned by user U1 who has made the inquiry. Here, the solution information indicates the second best solution that may be presented, for example, if the solution presented to user U1 at the time of the inquiry is unsolvable. The second best solution included in the solution information may include one or more solutions, or frequently asked questions (FAQ). The solution information is stored in association with the inquiry management number in the inquiry database of storage 23 of call center system 2, for example, by being input together with the outline of the solution by the operator to operator terminal 5 at the end of the inquiry.

FIG. 5 is a flowchart showing an example operation of management system 100 according to a variation of the embodiment. The operation shown in FIG. 5 is executed together with or after executing step S14 shown in FIG. 4. That is, the operation shown in FIG. 5 is executed when determiner 12 of management system 100 determines that the trouble in device 3 is unresolved.

First, processor 22 of call center system 2 determines whether there is solution information, by referring to the inquiry database of storage 23 (S21). If there is solution information (Yes in S21), processor 22 provides the solution information to information processing terminal 4, by transmitting the solution information to information processing terminal 4 via communicator 21 (S22). Information processing terminal 4, which has received the solution information, presents the solution information to user U1 by outputter 43 outputting the solution information, for example, by means of a push notification. Accordingly, user U1 can try the second best solution without making an inquiry to the call center again. If there is solution information but provision information, which will be described later, is stored in the inquiry database, processor 22 executes neither step S22 nor step S23.

Processor 22 then causes the inquiry database to store the provision information indicating that the solution information has already been provided (S23). On the other hand, if there is no solution information (No in S21), processor 22 executes neither step S22 nor step S23. This variation can present another solution to user U1, if the trouble in device 3 is unresolved, and is thus advantageous in increasing the rate of solving the trouble in device 3 and the satisfaction of user U1.

In the embodiment described above, processor 22 of call center system 2 outputs the solution information to information processing terminal 4. The output is not limited thereto. For example, outputter 13 of server 1 may output the solution information to information processing terminal 4. In this case, server 1 may store, in storage 14, the solution information transmitted from call center system 2 in advance or may request call center system 2 and obtain the solution information.

For example, in the embodiment described above, obtainer 11 of management system 100 (i.e., obtainer 11 of server 1 here) may further obtain trouble information indicating the details of the trouble from device 3 associated with the inquiry information obtained by obtainer 11. The trouble information is an error code, for example. In this variation, when transmitting the device information to server 1, device 3 may also transmit the trouble information, such as the error code, to server 1. When transmitting the result of determination to call center system 2, outputter 13 of management system 100 (i.e., outputter 13 of server 1 here) may also transmit the trouble information to call center system 2. That is, outputter 13 may further output the trouble information obtained by obtainer 11. In this variation, the CS business operator is advantageous in analyzing whether the trouble in device 3 is resolved by the suggested solution, by referring to the trouble information.

For example, in the embodiment described above, the trouble in device 3 relates to the connection of device 3 to network N1. The trouble is however not limited thereto. For example, the trouble in device 3 may be a partial malfunction of device 3. In this case, device 3 may transmit the device information including a log whether the function related to the trouble, about which the inquiry has been made, is recovered to server 1. In this variation, determiner 12 of management system 100 (i.e., determiner 12 of server 1 here) determines whether the trouble in device 3 is resolved, by referring the log obtained from device 3.

For example, in the embodiment described above, connection of device 3 to network N1 is made by executing the application included in information processing terminal 4. The means is how not limited thereto. For example, if device 3 includes an input interface for settings, the connection of device 3 to network N1 may be made by user U1 directly operating device 3.

For example, in the embodiment described above, user U1 makes an inquiry to the call center by means of the call function. The means is however not limited thereto. For example, user U1 may make an inquiry to the call center by means of an E-mail.

For example, in the embodiment described above, management system 100 includes the plurality of devices of: server 1; and call center system 2, but may include a single device. For example, part of the elements included in management system 100 in the embodiment described above may be included in the call center. That is, the present disclosure may be achieved by cloud computing or edge computing.

For example, in the embodiment described above, all or part of the elements of management system 100 according to the present disclosure may be achieved by dedicated hardware or by executing software programs suitable for the elements. The elements may be achieved by a program executer, such as a central processing unit (CPU) or a processor, reading out and executing the software programs recorded in a recoding medium, such as a hard disk drive (HDD) or a semiconductor memory.

The elements of management system 100 according to the present disclosure may include one or more electronic circuits. The one or more electronic circuits may be general-purpose circuits or dedicated circuits.

The one or more electronic circuits may include, for example, a semiconductor device, an integrated circuit (IC) or a large scale integration (LSI) circuit. The IC or LSI may be integrated in a chip or in a plurality of chips. While the IC and LSI are named here, the integrated circuit may be referred to a system LSI circuit, a very large scale integration (VLSI), or an ultra-LSI (ULSI) circuit depending on the degree of integration. A field programmable gate array (FPGA) programmable after the manufacture of an LSI circuit may be employed for at least the same purposes.

Note that these general and specific aspects of the present disclosure may be implemented using a system, a device, a method, an integrated circuit, or a computer program. Alternatively, the aspects of the present disclosure may be directed to a non-transitory computer-readable recording medium, such as an optical disk, an HDD, a semiconductor memory, having such a computer program recorded thereon. For example, the present disclosure may be directed to a program for causing a computer to execute the management method according to the embodiment described above. This program may be recorded in a non-transitory computer-readable recording medium, such as a CD-ROM, or may be distributed via a communication channel, such as the Internet.

As described above, the embodiment has been described as an example of the techniques according to the present disclosure. For this purpose, the appended drawings and the detailed description are provided.

The elements shown in the appended drawings and the detailed description include not only those essential to solve the problem but also those not essential to solve the problem but for illustrative purposes. The fact that these non-essential elements are shown in the appended drawings or detailed description should not be immediately interpreted as being essential.

Since the embodiment described above is intended to illustrate the techniques according to the present disclosure, various modifications, substitutions, additions, omissions, etc. may be made within the scope of the claims or their equivalents.

### (Summary)

As described above, management system 100 according to the first aspect includes obtainer 11, determiner 12, and outputter 13. Obtainer 11 obtains inquiry information on an inquiry about a trouble in device 3. After the inquiry, determiner 12 determines whether the trouble is resolved, based on presence or absence of device information that can be transmitted via network N1 from device 3 associated with the inquiry information obtained by obtainer 11. Outputter 13 outputs a result of determination by determiner 12.

Accordingly, after the inquiry, the system can output the result of determination as to whether the trouble in device 3 is resolved, based on the presence or absence of the device information that can be transmitted from device 3 about which the inquiry has been made. The system is thus advantageous in easily grasping whether the trouble is resolved in device 3 about which the inquiry has been made, by checking the result of determination.

Management system 100 according to the second aspect is an embodiment of the first aspect. In the second aspect, the trouble relates to connection of device 3 to network N1. After the inquiry, determiner 12 determines that the trouble is resolved, when obtaining the device information from device 3 associated with the inquiry information obtained by obtainer 11.

Accordingly, the system can determine that the trouble is resolved by obtaining the device information from device 3 associated with the inquiry information. The system is thus advantageous in easily determining that the trouble is resolved, which relates to connection of device 3 to network N1.

Management system 100 according to the third aspect is an embodiment of the first or second aspect. In the third aspect, the trouble relates to connection of device 3 to network N1. After the inquiry, determiner 12 determines that the trouble is unresolved, when the device information is not obtained for a predetermined time from device 3 associated with the inquiry information obtained by obtainer 11.

Accordingly, the system can determine that the trouble is unresolved, based on the duration of the state in which the device information is not obtained from device 3 associated with the inquiry information. The system is thus advantageous in easily determining that the trouble is unresolved which relates to connection of device 3 to network N1.

Management system 100 according to the fourth aspect is an embodiment of the third aspect. In the fourth aspect, if determiner 12 determines that the trouble is unresolved, the outputter (i.e., processor 22 of call center system 2) outputs solution information indicating a solution different from a solution presented at a time of the inquiry to information processing terminal 4 owned by user U1 who has made the inquiry.

Accordingly, the system can present another solution to user U1, if the trouble in device 3 is unresolved. The system is thus advantageous in increasing the rate of solving the trouble in device 3 and the satisfaction of user U1.

Management system 100 according to the fifth aspect is an embodiment of any one of the first to fourth aspects. In the fifth aspect, obtainer 11 further obtains trouble information indicating a detail of the trouble from device 3 associated with the inquiry information obtained by obtainer 11. Outputter 13 further outputs the trouble information obtained by obtainer 11.

Accordingly, the CS business operator is advantageous in easily analyzing whether the trouble in device 3 is resolved by the suggested solution, by referring to the trouble information.

A management method according to a sixth aspect includes: obtaining inquiry information on an inquiry about a trouble in device 3 (S11). This management method further includes, after the inquiry: determining whether the trouble is resolved, based on presence or absence of device information that can be transmitted via network N1 from device 3 associated with the inquiry information obtained (S12). This management method further includes: outputting a result of determination (S13, S14).

Accordingly, after the inquiry, the method can output the result of determination as to whether the trouble in device 3 is resolved, based on the presence or absence of the device information that can be transmitted from device 3 about which the inquiry has been made. The method is thus advantageous in easily grasping whether the trouble is resolved in device 3 about which the inquiry has been made, by checking the result of determination.

### [Industrial Applicability]

The present disclosure is applicable to a system, and so on, for managing an inquiry about a trouble in a device.

### [Reference Signs List]

- 1: server
- 11: communicator (obtainer)
- 12: determiner
- 13: outputter
- 14: storage
- 2: call center system
- 21: communicator
- 22: processor
- 23: storage
- 3: device
- 4: information processing terminal
- 41: communicator
- 42: processor
- 43: outputter
- 44: storage
- 5: operator terminal
- 100: management system
- Op1: operator
- N1: network
- U1: user

## Claims

1. A management system comprising:
an obtainer that obtains inquiry information on an inquiry about a trouble in a device;
a determiner that determines, after the inquiry, whether the trouble is resolved, based on presence or absence of device information that can be transmitted via a network from the device associated with the inquiry information obtained by the obtainer; and
an outputter that outputs a result of determination by the determiner.

2. The management system according to claim 1, wherein
the trouble relates to connection of the device to the network, and
after the inquiry, the determiner determines that the trouble is resolved, when obtaining the device information from the device associated with the inquiry information obtained by the obtainer.

3. The management system according to claim 1 or 2, wherein
the trouble relates to connection of the device to the network, and
after the inquiry, the determiner determines that the trouble is unresolved, when the device information is not obtained for a predetermined time from the device associated with the inquiry information obtained by the obtainer.

4. The management system according to claim 3, wherein
when the determiner determines that the trouble is unresolved, the outputter outputs solution information indicating a solution different from a solution presented at a time of the inquiry to an information processing terminal owned by a user who has made the inquiry.

5. The management system according to claim 1 or 2, wherein
the obtainer further obtains trouble information indicating a detail of the trouble from the device associated with the inquiry information obtained by the obtainer, and
the outputter further outputs the trouble information obtained by the obtainer.

6. A management method comprising:
obtaining inquiry information on an inquiry about a trouble in a device;
determining, after the inquiry, whether the trouble is resolved, based on presence or absence of device information that can be transmitted via a network from the device associated with the inquiry information obtained; and
outputting a result of determination.
